# EUROPEAN PATENT SPECIFICATION

(11) **EP 4 101 894 B1**
(45) Date of publication and mention of the grant of the patent: **23.07.2025**
(21) Application number: 21178357.6
(22) Date of filing: 08.06.2021
(51) Int. Cl.: C08L 69/00

(54) **THERMOPLASTIC COMPOSITIONS AND SHAPED ARTICLES THEREOF**
THERMOPLASTISCHE ZUSAMMENSETZUNGEN UND DARAUS GEFORMTE ARTIKEL
COMPOSITIONS THERMOPLASTIQUES ET ARTICLES FORMÉS À PARTIR DE CELLES-CI

(43) Date of publication of application: 14.12.2022
(73) Proprietor: SHPP Global Technologies B.V., 4612 PX Bergen op Zoom (NL)
(72) Inventor: He, Yunfei, Shanghai, 201319 (CN); Zheng, Yun, Shanghai, 201319 (CN); Shan, Wei, Shanghai, 201319 (CN); Gao, Rui, Shanghai, 201319 (CN)
(74) Representative: Balder IP Law, S.L.

(56) References cited:
- WO-A1-2019/123029
- CN-A- 111 040 411

## Description

This disclosure relates to thermoplastic compositions, and in particular to antimicrobial thermoplastic compositions, methods of manufacture, and uses thereof.

Polycarbonates are useful in the manufacture of articles and components for a wide range of applications, from automotive parts to electronic appliances. WO 2019/123029 A1 discloses a thermoplastic composition comprising a homopolycarbonate; and a poly(carbonate siloxane) component. Because of their broad use, particularly in electronic appliances, it is desirable to provide polycarbonate compositions with antimicrobial activity.

There accordingly remains a need in the art for antimicrobial thermoplastic compositions that have good mechanical properties. It would be a further advantage if the compositions good optical properties (e.g., transparency and haze).

### SUMMARY

The above-described and other deficiencies of the art are met by a thermoplastic composition comprising: a polycarbonate and an antimicrobial agent comprising silver silicate powder, silver silicate glass powder, or a combination thereof.

The invention relates to a thermoplastic composition comprising: a homopolycarbonate; a poly(carbonate siloxane) present in an amount effective to provide 0.5-10 wt% total siloxane content; based on the total weight of the composition; an antimicrobial agent comprising silver silicate powder, silver silicate glass powder, or a combination thereof.

In another aspect, a method of manufacture comprises combining the above-described components to form a thermoplastic composition.

In yet another aspect, an article comprises the above-described thermoplastic composition.

In still another aspect, a method of manufacture of an article comprises molding, extruding, or shaping the above-described thermoplastic composition into an article.

The above described and other features are exemplified by the following detailed description, examples, and claims.

### DETAILED DESCRIPTION

Microbial infection remains a concern in several areas, particularly in electronic devices, such as, for example, handheld electronic devices. When considering electronic devices and household appliances, increasing geometric complexity may render them difficult and time-consuming to clean effectively, potentially providing an increased chance of the spread of bacteria. Compositions including silver may have antimicrobial properties. However, incorporation of an antimicrobial reagent including silver into polymeric compositions may adversely affect the other properties of the compositions. The inventors hereof have discovered that the incorporation of an antimicrobial agent including silver silicate powder, silver silicate glass powder, or a combination thereof into thermoplastic compositions may provide antimicrobial activity while maintaining optical properties such as percent transmission and haze. In particular, thermoplastic compositions including a combination of a homopolycarbonate, a poly(carbonate-siloxane) and present in an amount effective to provide 0.5-10 wt% total siloxane content, based on the total weight of the composition, and an antimicrobial agent including silicate powder, silver silicate glass powder, or a combination thereof, resulted in a desirable combination of properties, such as, for example, antimicrobial activity and good optical properties.

The thermoplastic compositions include a polycarbonate and an antimicrobial agent including silver silicate powder, silver silicate glass powder, or a combination thereof. The polycarbonate includes a homopolycarbonate and a poly(carbonate-siloxane). The individual components of the thermoplastic compositions are discussed in more detail below.

"Polycarbonate" as used herein means a polymer having repeating structural carbonate units of formula (1) 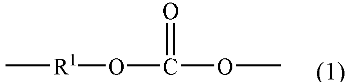 in which at least 60 percent of the total number of R¹ groups contain aromatic moieties and the balance thereof are aliphatic, alicyclic, or aromatic. In an aspect, each R¹ is a C₆₋₃₀ aromatic group, that is, contains at least one aromatic moiety. R¹ may be derived from an aromatic dihydroxy compound of the formula HO-R¹-OH, in particular of formula (2)

HO-A¹-Y¹-A²-OH (2)

wherein each of A¹ and A² is a monocyclic divalent aromatic group and Y¹ is a single bond or a bridging group having one or more atoms that separate from A². In an aspect, one atom separates A¹ from A². Preferably, each R¹ may be derived from a bisphenol of formula (3) 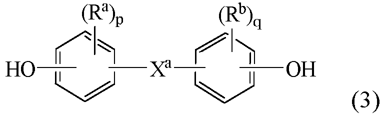 wherein R^{a} and R^{b} are each independently a halogen, C₁₋₁₂ alkoxy, or C₁₋₁₂ alkyl, and p and q are each independently integers of 0 to 4. It will be understood that when p or q is less than 4, the valence of each carbon of the ring is filled by hydrogen. Also in formula (3), X^{a} is a bridging group connecting the two hydroxy-substituted aromatic groups, where the bridging group and the hydroxy substituent of each C₆ arylene group are disposed ortho, meta, or para (preferably para) to each other on the C₆ arylene group. In an aspect, the bridging group X^{a} is single bond, - O-, -S-, -S(O)-, -S(O)₂-, -C(O)-, or a C₁₋₆₀ organic group. The organic bridging group may be cyclic or acyclic, aromatic or non-aromatic, and may further comprise heteroatoms such as halogens, oxygen, nitrogen, sulfur, silicon, or phosphorous. The ₁₋₆₀ organic group may be disposed such that the C₆ arylene groups connected thereto are each connected to a common alkylidene carbon or to different carbons of the C₁₋₆₀ organic bridging group. In an aspect, p and q is each 1, and R^{a} and R^{b} are each a C₁₋₃ alkyl group, preferably methyl, disposed meta to the hydroxy group on each arylene group.

In an aspect, X^{a} is a C₃₋₁₈ cycloalkylidene, a C₁₋₂₅ alkylidene of formula -C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl, or a group of the formula -C(=R^{e})- wherein R^{e} is a divalent C₁₋₁₂ hydrocarbon group. Groups of these types include methylene, cyclohexylmethylidene, ethylidene, neopentylidene, and isopropylidene, as well as 2-[2.2.1]-bicycloheptylidene, cyclohexylidene, 3,3-dimethyl-5-methylcyclohexylidene, cyclopentylidene, cyclododecylidene, and adamantylidene.

In another aspect, X^{a} is a C₁₋₁₈ alkylene, a C₃₋₁₈ cycloalkylene, a fused C₆₋₁₈ cycloalkylene, or a group of the formula -J¹-G-J²- wherein J¹ and J² are the same or different C₁₋₆ alkylene and G is a C₃₋₁₂ cycloalkylidene or a C₆₋₁₆ arylene.

For example, X^{a} may be a substituted C₃₋₁₈ cycloalkylidene of formula (4) 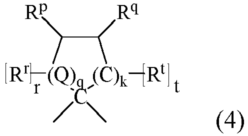 wherein R^{r}, R^{p}, R^{q}, and R^{t} are each independently hydrogen, halogen, oxygen, or C₁₋₁₂ hydrocarbon groups; Q is a direct bond, a carbon, or a divalent oxygen, sulfur, or -N(Z)- where Z is hydrogen, halogen, hydroxy, C₁₋₁₂ alkyl, C₁₋₁₂ alkoxy, C₆₋₁₂ aryl, or C₁₋₁₂ acyl; r is 0 to 2, t is 1 or 2, q is 0 or 1, and k is 0 to 3, with the proviso that at least two of R^{r}, R^{p}, R^{q}, and R^{t} taken together are a fused cycloaliphatic, aromatic, or heteroaromatic ring. It will be understood that where the fused ring is aromatic, the ring as shown in formula (4) will have an unsaturated carbon-carbon linkage where the ring is fused. When k is one and q is 0, the ring as shown in formula (4) contains 4 carbon atoms, when k is 2, the ring as shown in formula (4) contains 5 carbon atoms, and when k is 3, the ring contains 6 carbon atoms. In an aspect, two adjacent groups (e.g., R^{q} and R^{t} taken together) form an aromatic group, and in another aspect, R^{q} and R^{t} taken together form one aromatic group and R^{r} and R^{p} taken together form a second aromatic group. When R^{q} and R^{t} taken together form an aromatic group, R^{p} may be a double-bonded oxygen atom, i.e., a ketone, or Q may be -N(Z)- wherein Z is phenyl.

Bisphenols wherein X^{a} is a cycloalkylidene of formula (4) may be used in the manufacture of polycarbonates containing phthalimidine carbonate units of formula (1a) 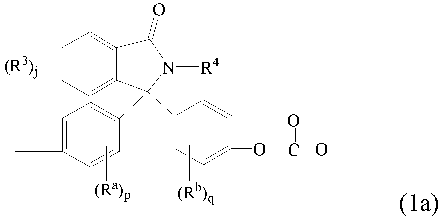 wherein R^{a}, R^{b}, p, and q are as in formula (3), R³ is each independently a C₁₋₆ alkyl, j is 0 to 4, and R₄ is hydrogen, C₁₋₆ alkyl, or a substituted or unsubstituted phenyl, for example a phenyl substituted with up to five C₁₋₆ alkyls. For example, the phthalimidine carbonate units are of formula (1b) 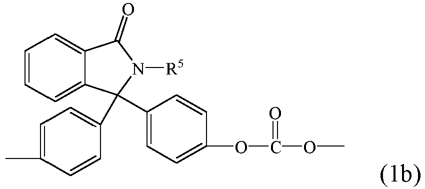 wherein R⁵ is hydrogen, phenyl optionally substituted with up to five 5 C₁₋₆ alkyls, or C₁₋₄ alkyl. In an aspect in formula (1b), R⁵ is hydrogen, methyl, or phenyl, preferably phenyl. Carbonate units (1b) wherein R⁵ is phenyl may be derived from 2-phenyl-3,3'-bis(4-hydroxy phenyl)phthalimidine (also known as 3,3-bis(4-hydroxyphenyl)-2-phenylisoindolin-1-one, or N-phenyl phenolphthalein bisphenol ("PPPBP")).

Other bisphenol carbonate repeating units of this type are the isatin carbonate units of formula (1c) and (1d) 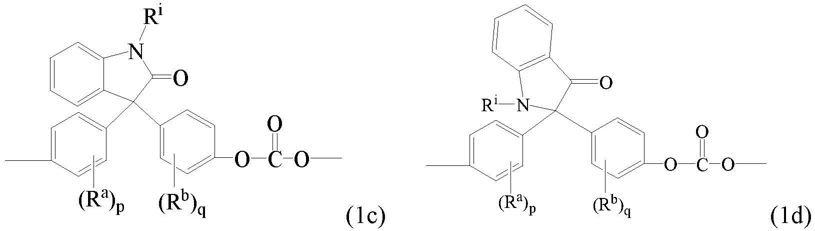 wherein R^{a} and R^{b} are each independently a halogen, C₁₋₁₂ alkoxy, or C₁₋₁₂ alkyl, p and q are each independently 0 to 4, and Rⁱ is C₁₋₁₂ alkyl, phenyl optionally substituted with 1 to 5 C₁₋₁₀ alkyl, or benzyl optionally substituted with 1 to 5 C₁₋₁₀ alkyl. In an aspect, R^{a} and R^{b} are each methyl, p and q are each independently 0 or 1, and Rⁱ is C₁₋₄ alkyl or phenyl.

Other examples of bisphenol carbonate units derived from of bisphenols (3) wherein X^{a} is a substituted or unsubstituted C₃₋₁₈ cycloalkylidene include the cyclohexylidene-bridged bisphenol of formula (1e) 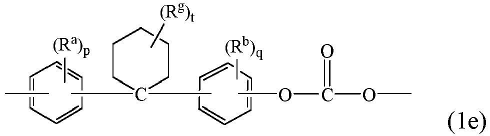 wherein R^{a} and R^{b} are each independently C₁₋₁₂ alkyl, R^{g} is C₁₋₁₂ alkyl, p and q are each independently 0 to 4, and t is 0 to 10. In a specific aspect, at least one of each of R^{a} and R^{b} are disposed meta to the cyclohexylidene bridging group. In an aspect, R^{a} and R^{b} are each independently C₁₋₄ alkyl, R^{g} is C₁₋₄ alkyl, p and q are each 0 or 1, and t is 0 to 5. In another specific aspect, R^{a}, R^{b}, and R^{g} are each methyl, p and q are each 0 or 1, and t is 0 or 3, preferably 0. In still another aspect, p and q are each 0, each R^{g} is methyl, and t is 3, such that X^{a} is 3,3-dimethyl-5-methyl cyclohexylidene.

Examples of other bisphenol carbonate units derived from bisphenol (3) wherein X^{a} is a substituted or unsubstituted C₃₋₁₈ cycloalkylidene include adamantyl units of formula (1f) and fluorenyl units of formula (1g) 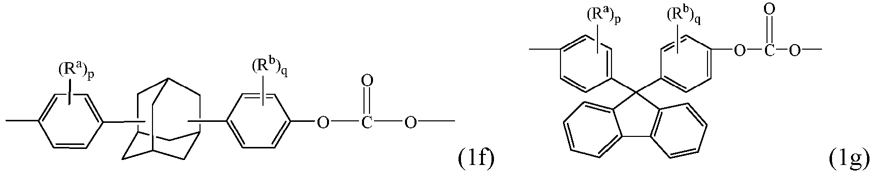 wherein R^{a} and R^{b} are each independently C₁₋₁₂ alkyl, and p and q are each independently 1 to 4. In a specific aspect, at least one of each of R^{a} and R^{b} are disposed meta to the cycloalkylidene bridging group. In an aspect, R^{a} and R^{b} are each independently C₁₋₃ alkyl, and p and q are each 0 or 1; preferably, R^{a}, R^{b} are each methyl, p and q are each 0 or 1, and when p and q are 1, the methyl group is disposed meta to the cycloalkylidene bridging group. Carbonates containing units (1a) to (1g) are useful for making polycarbonates with high glass transition temperatures (Tg) and high heat distortion temperatures.

Other useful dihydroxy compounds of the formula HO-R¹-OH include aromatic dihydroxy compounds of formula (6) 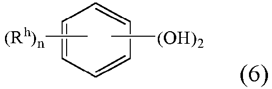 wherein each R^{h} is independently a halogen atom, C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4. The halogen is usually bromine.

Specific examples of bisphenol compounds of formula (3) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-2-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). A combination may also be used. In a specific aspect, the polycarbonate is a linear homopolymer derived from bisphenol A, in which each of A¹ and A² is p-phenylene and Y¹ is isopropylidene in formula (3).

The polycarbonates may have an intrinsic viscosity, as determined in chloroform at 25°C, of 0.3 to 1.5 deciliters per gram (dl/gm), preferably 0.45 to 1.0 dl/gm. The polycarbonates may have a weight average molecular weight (Mw) of 10,000 to 200,000 g/mol, preferably 20,000 to 100,000 g/mol, as measured by gel permeation chromatography (GPC), using a crosslinked styrene-divinylbenzene column and calibrated to polystyrene and calculated for polycarbonate. GPC samples are prepared at a concentration of 1 mg per ml and are eluted at a flow rate of 1.5 ml per minute.

The thermoplastic compositions may include a linear or branched homopolycarbonate. In some aspects, the homopolycarbonate is a bisphenol A homopolycarbonate. The thermoplastic compositions may include a first bisphenol A homopolycarbonate having a weight average molecular weight of 26,000-40,000 grams per mole, a second bisphenol A homopolycarbonate having a weight average molecular weight of 15,000-25,000 grams per mole, or a combination thereof, each as measured via gel permeation chromatography using polystyrene standards and calculated for polycarbonate. The homopolycarbonate may include a single homopolycarbonate or a combination of two or more homopolycarbonates. When two homopolycarbonates are present, the ratio of the of one homopolycarbonate to the other may range from 1:15 to 15:1, from 1:12 to 12:1, from 1:10 to 10:1, from 1:4 to 4:1, from 1:3 to 3:1, from 1:2 to 2:1, or the two homopolycarbonates may be present in a 1:1 ratio. The homopolycarbonate may be present from 1-99 wt%, 50-99 wt%, 70-99 wt%, or 75-99 wt%, each based on the total weight of the thermoplastic composition.

In addition to homopolycarbonates (wherein each R¹ in the polymer is the same), the term "polycarbonates" includes copolymers comprising different R¹ moieties in the carbonate ("copolycarbonates"), and copolymers comprising carbonate units and other types of polymer units, such as ester units or siloxane units.

The thermoplastic compositions may include a polycarbonate copolymer. A specific type of copolymer is a poly(ester-carbonate), also known as a polyester-polycarbonate. Such copolymers further contain, in addition to recurring carbonate units of formula (1), repeating units of formula (7) 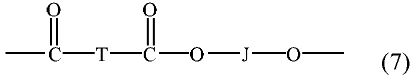 wherein J is a divalent group derived from a dihydroxy compound (including a reactive derivative thereof), and may be, for example, a C₁₋₁₀ alkylene, a C₆₋₂₀ cycloalkylene, a C₅₋₂₀ arylene, or a polyoxyalkylene in which the alkylene groups contain 2 to 6 carbon atoms, preferably 2, 3, or 4 carbon atoms; and T is a divalent group derived from a dicarboxylic acid (including a reactive derivative thereof), and may be, for example, a C₂₋₂₀ alkylene, a C₅₋₂₀ cycloalkylene, or a C₆₋₂₀ arylene. Copolyesters containing a combination of different T or J groups may be used. The polyester units may be branched or linear.

In an aspect, J is a C₂₋₃₀ alkylene group having a straight chain, branched chain, or cyclic (including polycyclic) structure, for example ethylene, n-propylene, i-proplyene, 1,4-butylene, 1,4-cyclohexylene, or 1,4-methylenecyclohexane. In another aspect, J is derived from a bisphenol of formula (3), e.g., bisphenol A. In another aspect, J is derived from an aromatic dihydroxy compound of formula (6), e.g, resorcinol.

Aromatic dicarboxylic acids that may be used to prepare the polyester units include isophthalic or terephthalic acid, 1,2-di(p-carboxyphenyl)ethane, 4,4'-dicarboxydiphenyl ether, 4,4'-bisbenzoic acid, or a combination thereof. Acids containing fused rings may also be present, such as in 1,4-, 1,5-, or 2,6-naphthalenedicarboxylic acids. Specific dicarboxylic acids include terephthalic acid, isophthalic acid, naphthalene dicarboxylic acid, 1,4-cyclohexane dicarboxylic acid, or a combination thereof. A specific dicarboxylic acid comprises a combination of isophthalic acid and terephthalic acid wherein the weight ratio of isophthalic acid to terephthalic acid is 91:9 to 2:98.

Specific ester units include ethylene terephthalate, n-propylene terephthalate, n-butylene terephthalate, 1,4-cyclohexanedimethylene terephthalate, and ester units derived from isophthalic acid, terephthalic acid, and resorcinol (ITR)). The molar ratio of ester units to carbonate units in the copolymers may vary broadly, for example 1:99 to 99:1, preferably 10:90 to 90:10, more preferably 25:75 to 75:25, or 2:98 to 15:85, depending on the desired properties of the final composition. Specific poly(ester-carbonate)s are those including bisphenol A carbonate units and isophthalate-terephthalate-bisphenol A ester units, also commonly referred to as poly(carbonate-ester)s (PCE) poly(phthalate-carbonate)s (PPC) depending on the molar ratio of carbonate units and ester units.

The polycarbonate may be an aromatic poly(ester-carbonate). Such polycarbonates further contain, in addition to recurring carbonate units of formula (1), repeating ester units of formula (3) 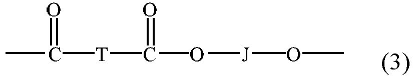 wherein J is a divalent group derived from an aromatic dihydroxy compound (including a reactive derivative thereof), such as a bisphenol of formula (2), e.g., bisphenol A; and T is a divalent group derived from an aromatic dicarboxylic acid (including a reactive derivative thereof), preferably isophthalic or terephthalic acid wherein the weight ratio of isophthalic acid to terephthalic acid is 91:9 to 2:98. Copolyesters containing a combination of different T or J groups may be used. The polyester units may be branched or linear.

In an aspect, J is derived from a bisphenol of formula (2), e.g., bisphenol A. In another aspect, J is derived from an aromatic dihydroxy compound, e.g, resorcinol. A portion of the groups J, for example up to 20 mole percent (mol%) may be a C₂₋₃₀ alkylene group having a straight chain, branched chain, or cyclic (including polycyclic) structure, for example ethylene, n-propylene, i-proplyene, 1,4-butylene, 1,4-cyclohexylene, or 1,4-methylenecyclohexane. Preferably, all J groups are aromatic.

Aromatic dicarboxylic acids that may be used to prepare the polyester units include isophthalic or terephthalic acid, 1,2-di(p-carboxyphenyl)ethane, 4,4'-dicarboxydiphenyl ether, 4,4'-bisbenzoic acid, or a combination thereof. Acids containing fused rings may also be present, such as in 1,4-, 1,5-, or 2,6-naphthalenedicarboxylic acids. Specific dicarboxylic acids include terephthalic acid, isophthalic acid, naphthalene dicarboxylic acid, or a combination thereof. A specific dicarboxylic acid comprises a combination of isophthalic acid and terephthalic acid wherein the weight ratio of isophthalic acid to terephthalic acid is 91:9 to 2:98. A portion of the groups T, for example up to 20 mol%, may be aliphatic, for example derived from 1,4-cyclohexane dicarboxylic acid. Preferably all T groups are aromatic.

The molar ratio of ester units to carbonate units in the polycarbonates may vary broadly, for example 1:99 to 99:1, preferably 10:90 to 90:10, more preferably 25:75 to 75:25, or 2:98 to 15:85, depending on the desired properties of the final composition.

Specific poly(ester-carbonate)s are those including bisphenol A carbonate units and isophthalate/terephthalate-bisphenol A ester units, i.e., a poly(bisphenol A carbonate)-co-(bisphenol A-phthalate-ester) of formula (4a) 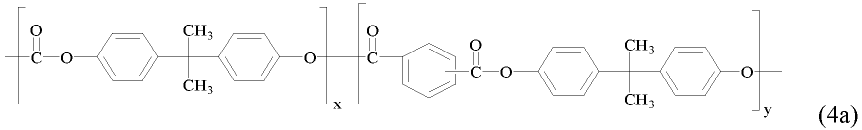 wherein x and y represent the wt% of bisphenol A carbonate units and isophthalate/terephthalate -bisphenol A ester units, respectively. Generally, the units are present as blocks. In an aspect, the weight ratio of carbonate units x to ester units y in the polycarbonates is 1:99 to 50:50, or 5:95 to 25:75, or 10:90 to 45:55. Copolymers of formula (5) comprising 35-45 wt% of carbonate units and 55-65 wt% of ester units, wherein the ester units have a molar ratio of isophthalate to terephthalate of 45:55 to 55:45 are often referred to as poly(carbonate-ester)s (PCE). Copolymers comprising 15-25 wt% of carbonate units and 75-85 wt% of ester units. wherein the ester units have a molar ratio of isophthalate to terephthalate from 98:2 to 88:12 are often referred to as poly(phthalate-carbonate)s (PPC).

In another aspect, the high heat poly(ester-carbonate) is a poly(carbonate-co-monoarylate ester) of formula (4b) that includes aromatic carbonate units (1) and repeating monoarylate ester units 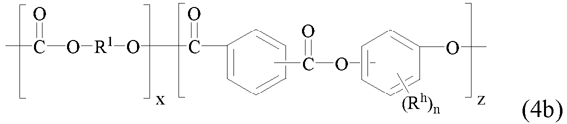 wherein R¹ is as defined in formula (1), and each R^{h} is independently a halogen atom, a C₁₋₁₀ hydrocarbyl such as a C₁₋₁₀ alkyl group, a halogen-substituted C₁₋₁₀ alkyl group, a C₆₋₁₀ aryl group, or a halogen-substituted C₆₋₁₀ aryl group, and n is 0-4. Preferably, each R^{h} is independently a C₁₋₄ alkyl, and n is 0-3, 0-1, or 0. The mole ratio of carbonate units x to ester units z may be from 99:1 to 1:99, or from 98:2 to 2:98, or from 90:10 to 10:90. In an aspect the mole ratio of x:z is from 50:50 to 99:1, or from 1:99 to 50:50.

In an aspect, the high heat poly(ester-carbonate) comprises aromatic ester units and monoarylate ester units derived from the reaction of a combination of isophthalic and terephthalic diacids (or a reactive derivative thereof) with resorcinol (or a reactive derivative thereof) to provide isophthalate/terephthalate-resorcinol ("ITR" ester units). The ITR ester units may be present in the high heat poly(ester-carbonate) in an amount greater than or equal to 95 mol%, preferably greater than or equal to 99 mol%, and still more preferably greater than or equal to 99.5 mol%, based on the total moles of ester units in the polycarbonate. A preferred high heat poly(ester-carbonate) comprises bisphenol A carbonate units, and ITR ester units derived from terephthalic acid, isophthalic acid, and resorcinol, i.e., a poly(bisphenol A carbonate-co-isophthalate/terephthalate-resorcinol ester) of formula (c) 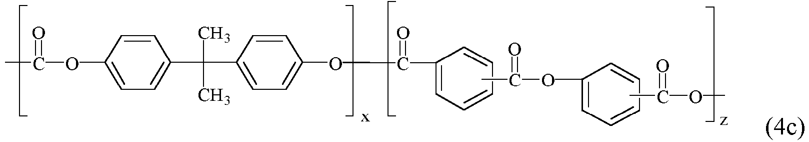 wherein the mole ratio of x:z is from 98:2 to 2:98, or from 90:10 to 10:90. In an aspect the mole ratio of x:z is from 50:50 to 99:1, or from 1:99 to 50:50. The ITR ester units may be present in the poly(bisphenol A carbonate-co-isophthalate-terephthalate-resorcinol ester) in an amount greater than or equal to 95 mol%, preferably greater than or equal to 99 mol%, and still more preferably greater than or equal to 99.5 mol%, based on the total moles of ester units in the copolymer. Other carbonate units, other ester units, or a combination thereof may be present, in a total amount of 1 to 20 mole%, based on the total moles of units in the copolymers, for example monoaryl carbonate units of formula (5) and bisphenol ester units of formula (3a): 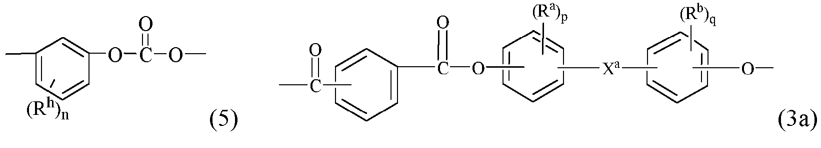 wherein, in the foregoing formulae, R^{h} is each independently a C₁₋₁₀ hydrocarbon group, n is 0-4, R^{a} and R^{b} are each independently a C₁₋₁₂ alkyl, p and q are each independently integers of 0-4, and X^{a} is a single bond, -O-, -S-, -S(O)-, -S(O)₂-, -C(O)-, or a C₁₋₁₃ alkylidene of formula -C(R^{c})(R^{d}) - wherein R^{c} and R^{d} are each independently hydrogen or C₁₋₁₂ alkyl, or a group of the formula -C(=R^{e})- wherein R^{e} is a divalent C₁₋₁₂ hydrocarbon group. The bisphenol ester units may be bisphenol A phthalate ester units of the formula (3b)

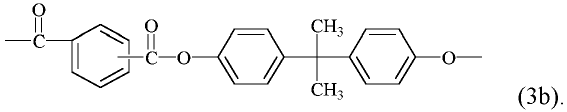

In an aspect, the poly(bisphenol A carbonate-co-isophthalate/terephthalate-resorcinol ester) (4c) comprises 1-90 mol% of bisphenol A carbonate units, 10-99 mol% of isophthalic acid-terephthalic acid-resorcinol ester units, and optionally 1-60 mol% of resorcinol carbonate units, isophthalic acid-terephthalic acid-bisphenol A phthalate ester units, or a combination thereof. In another aspect, poly(bisphenol A carbonate-co-isophthalate/terephthalate resorcinol ester) (6) comprises 10-20 mol% of bisphenol A carbonate units, 20-98 mol% of isophthalic acid-terephthalic acid-resorcinol ester units, and optionally 1-60 mol% of resorcinol carbonate units, isophthalic acid-terephthalic acid-bisphenol A phthalate ester units, or a combination thereof.

The high heat poly(ester-carbonate)s may have an Mw of 2,000-100,000 g/mol, preferably 3,000-75,000 g/mol, more preferably 4,000-50,000 g/mol, more preferably 5,000-35,000 g/mol, and still more preferably 17,000-30,000 g/mol. Molecular weight determinations are performed using GPC using a cross linked styrene-divinyl benzene column, at a sample concentration of 1 milligram per milliliter, and calibrated for polystyrene and calculated for polycarbonate. Samples are eluted at a flow rate of 1.0 ml/min with methylene chloride as the eluent.

A specific example of a poly(ester-carbonate) is a poly(aliphatic ester-carbonate derived from a linear C₆₋₂₀ aliphatic dicarboxylic acid (which includes a reactive derivative thereof), specifically a linear C₆₋₁₂ aliphatic dicarboxylic acid(which includes a reactive derivative thereof). Specific dicarboxylic acids include n-hexanedioic acid (adipic acid), n-decanedioic acid (sebacic acid), and alpha, omega-C₁₂ dicarboxylic acids such as dodecanedioic acid (DDDA). A specific poly(aliphatic ester)-polycarbonate is of formula (8): 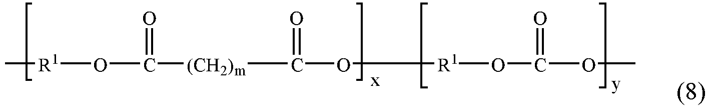 wherein each R¹ may be the same or different, and is as described in formula (1), m is 4 to 18, preferably 4 to 10, and the average molar ratio of ester units to carbonate units x:y is 99:1 to 1:99, including 13:87 to 2:98, or 9:91 to 2:98, or 8:92 to 2:98. In a specific aspect, the poly(aliphatic ester)-polycarbonate copolymer comprises bisphenol A sebacate ester units and bisphenol A carbonate units, having, for example an average molar ratio of x:y of 2:98 to 8:92, for example 6:94. Such poly(aliphatic ester-carbonate)s are commercially available as LEXAN HFD from SABIC.

The poly(aliphatic ester-carbonate) may have a weight average molecular weight of 15,000 to 40,000 g/mol, including 20,000 to 38,000 g/mol (measured by GPC using polystyrene standards and calculated for polycarbonate).

Polycarbonates may be manufactured by processes such as interfacial polymerization and melt polymerization, which are known, and are described, for example, in WO 2013/175448 and WO 2014/072923 A1. An end-capping agent (also referred to as a chain stopper agent or chain terminating agent) may be included during polymerization to provide end groups, for example monocyclic phenols such as phenol, p-cyanophenol, and C₁₋₂₂ alkyl-substituted phenols such as p-cumyl-phenol, resorcinol monobenzoate, and p-and tertiary-butyl phenol, monoethers of diphenols, such as p-methoxyphenol, monoesters of diphenols such as resorcinol monobenzoate, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups may be used. Branched polycarbonate blocks may be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents may be added at a level of 0.05 to 2.0 wt. %. Combinations comprising linear polycarbonates and branched polycarbonates may be used.

An end-capping agent (also referred to as a chain stopper agent or chain terminating agent) may be included during polymerization to provide end groups. The end-capping agent (and thus end groups) are selected based on the desired properties of the polycarbonates. Exemplary end-capping agents are exemplified by monocyclic phenols such as phenol and C₁₋₂₂ alkyl-substituted phenols such as p-cumyl-phenol, resorcinol monobenzoate, and p-and tertiary-butyl phenol, monoethers of diphenols, such as p-methoxyphenol, and alkyl-substituted phenols with branched chain alkyl substituents having 8 to 9 carbon atoms, 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, mono-carboxylic acid chlorides such as benzoyl chloride, C₁₋₂₂ alkyl-substituted benzoyl chloride, toluoyl chloride, bromobenzoyl chloride, cinnamoyl chloride, and 4-nadimidobenzoyl chloride, polycyclic, mono-carboxylic acid chlorides such as trimellitic anhydride chloride, and naphthoyl chloride, functionalized chlorides of aliphatic monocarboxylic acids, such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups may be used.

Branched polycarbonate blocks may be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents may be added at a level of 0.05 to 4.0 wt%, preferably 0.25 to 2.0 wt%. Combinations comprising linear polycarbonates and branched polycarbonates may be used.

The thermoplastic composition includes a poly(carbonate-siloxane), also referred to in the art as a polycarbonate-polysiloxane copolymer. The polysiloxane blocks comprise repeating diorganosiloxane units as in formula (10) 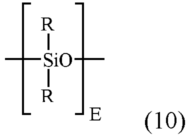 wherein each R is independently a C₁₋₁₃ monovalent organic group. For example, R may be a C₁₋₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkylene, C₇₋₁₃ arylalkylenoxy, C₇₋₁₃ alkylarylene, or C₇₋₁₃ alkylaryleneoxy. The foregoing groups may be fully or partially halogenated with fluorine, chlorine, bromine, or iodine, or a combination thereof. In an aspect, where a transparent poly(carbonate-siloxane) is desired, R is unsubstituted by halogen. Combinations of the foregoing R groups may be used in the same copolymer.

The value of E in formula (10) may vary widely depending on the type and relative amount of each component in the thermoplastic composition, the desired properties of the composition, and like considerations. Generally, E has an average value of 2 to 1,000, preferably 2 to 500, 2 to 200, or 2 to 125, 5 to 80, or 10 to 70. In an aspect, E has an average value of 10 to 80 or 10 to 40, and in still another aspect, E has an average value of 40 to 80, or 40 to 70. Where E is of a lower value, e.g., less than 40, it may be desirable to use a relatively larger amount of the poly(carbonate-siloxane) copolymer. Conversely, where E is of a higher value, e.g., greater than 40, a relatively lower amount of the poly(carbonate-siloxane) copolymer may be used. A combination of a first and a second (or more) poly(carbonate-siloxane) copolymers may be used, wherein the average value of E of the first copolymer is less than the average value of E of the second copolymer.

In an aspect, the polysiloxane blocks are of formula (11) 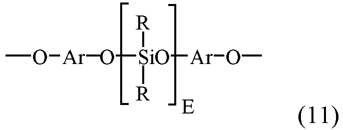 wherein E and R are as defined if formula (10); each R may be the same or different, and is as defined above; and Ar may be the same or different, and is a substituted or unsubstituted C₆₋₃₀ arylene, wherein the bonds are directly connected to an aromatic moiety. Ar groups in formula (11) may be derived from a C₆₋₃₀ dihydroxyarylene compound, for example a dihydroxyarylene compound of formula (3) or (6). Dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane.

In another aspect, polysiloxane blocks are of formula (13) 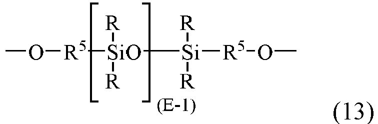 wherein R and E are as described above, and each R⁵ is independently a divalent C₁₋₃₀ organic group, and wherein the polymerized polysiloxane unit is the reaction residue of its corresponding dihydroxy compound. In a specific aspect, the polysiloxane blocks are of formula (14): 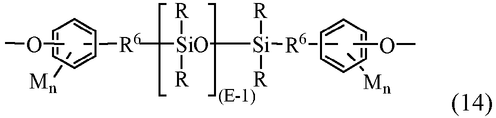 wherein R and E are as defined above. R⁶ in formula (14) is a divalent C₂₋₈ aliphatic group. Each M in formula (14) may be the same or different, and may be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkylaryl, or C₇₋₁₂ alkylaryloxy, wherein each n is independently 0, 1, 2, 3, or 4.

In an aspect, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another aspect, R is methyl, or a combination of methyl and trifluoropropyl, or a combination of methyl and phenyl. In still another aspect, R is methyl, M is methoxy, n is one, and R⁶ is a divalent C₁₋₃ aliphatic group. Specific polysiloxane blocks are of the formula 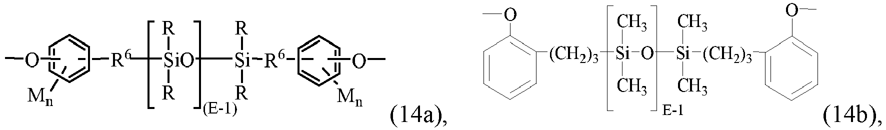 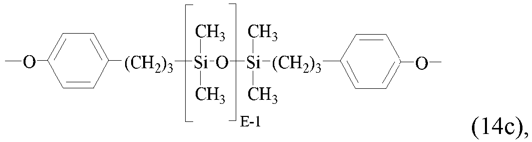 or a combination thereof, wherein E has an average value of 2 to 200, 2 to 125, 5 to 125, 5 to 100, 5 to 50, 20 to 80, or 5 to 20.

Blocks of formula (14) may be derived from the corresponding dihydroxy polysiloxane, which in turn may be prepared effecting a platinum-catalyzed addition between the siloxane hydride and an aliphatically unsaturated monohydric phenol uch as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane) copolymers may then be manufactured, for example, by the synthetic procedure of European Patent Application Publication No. 0 524 731 A1 of Hoover, page 5, Preparation 2.

Transparent poly(carbonate-siloxane) copolymers comprise carbonate units (1) derived from bisphenol A, and repeating siloxane units (14a), (14b), (14c), or a combination thereof (preferably of formula 14a), wherein E has an average value of 4 to 50, 4 to 15, preferably 5 to 15, more preferably 6 to 15, and still more preferably 7 to 10. The transparent copolymers may be manufactured using one or both of the tube reactor processes described in U.S. Patent Application No. 2004/0039145A1 or the process described in U.S. Patent No. 6,723,864 may be used to synthesize the poly(carbonate-siloxane) copolymers.

The poly(carbonate-siloxane) copolymers may comprise 50 to 99 wt% of carbonate units and 1 to 50 wt% siloxane units. Within this range, the poly(carbonate-siloxane) copolymer may comprise 70 to 98 wt%, more preferably 75 to 97 wt% of carbonate units and 2 to 30 wt%, more preferably 3 to 25 wt% siloxane units.

In an aspect, a blend is used, in particular a blend of a bisphenol A homopolycarbonate and a poly(carbonate-siloxane) block copolymer of bisphenol A blocks and eugenol capped polydimethylsiloxane blocks, of the formula 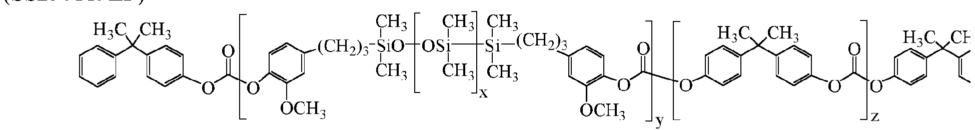 wherein x is 1 to 200, preferably 5 to 85, preferably 10 to 70, preferably 15 to 65, and more preferably 40 to 60; x is 1 to 500, or 10 to 200, and z is 1 to 1000, or 10 to 800. In an aspect, x is 1 to 200, y is 1 to 90 and z is 1 to 600, and in another aspect, x is 30 to 50, y is 10 to 30 and z is 45 to 600. The polysiloxane blocks may be randomly distributed or controlled distributed among the polycarbonate blocks.

In an aspect, the poly(carbonate-siloxane) copolymer comprises 10 wt% or less, preferably 8 wt% or less of the polysiloxane based on the total weight of the poly(carbonate-siloxane) copolymer. In another aspect, the poly(carbonate-siloxane) copolymer comprises 10 wt% or more, preferably 12 wt% or more, and more preferably 14 wt% or more, of the polysiloxane copolymer based on the total weight of the poly(carbonate-siloxane) copolymer.

In an aspect, the poly(carbonate-siloxane) copolymer comprises greater than 30-70 wt%, preferably 35-65 wt%, more preferably 35-55 wt%, even more preferably 35-45 wt% of the polysiloxane based on the total weight of the poly(carbonate-siloxane) copolymer.

Poly(carbonate-siloxane)s may have a weight average molecular weight of 2,000 to 100,000 g/mol, preferably 5,000 to 50,000 g/mol as measured by gel permeation chromatography using a crosslinked styrene-divinyl benzene column, at a sample concentration of 1 milligram per milliliter, and as calibrated for polystyrene and calculate for polycarbonate.

The poly(carbonate-siloxane)s may have a melt volume flow rate, measured at 300°C/1.2 kg, of 1 to 50 cubic centimeters per 10 minutes (cc/10 min), preferably 2 to 30 cc/10 min. Combinations of the poly(carbonate-siloxane)s of different flow properties may be used to achieve the overall desired flow property.

The present inventors have discovered that thermoplastic compositions may exhibit a desirable combination of properties including antimicrobial activity while maintaining optical properties when the thermoplastic compositions include a homopolycarbonate, a poly(carbonate-siloxane), and an antimicrobial agent including silver silicate powder, silver silicate glass powder, or a combination thereof.

The total siloxane content of the compositions is 0.5-10 wt%. 1-8 wt%, or 1-6 wt% each based on the total weight of the thermoplastic composition.

The poly(carbonate-siloxane) may have a weight average molecular weight of 21,000 to 50,000 g/mol. Within this range, the weight average molecular weight may be 25,000 to 45,000 g/mol, or 30,000 to 45,000 g/mol, or 32,000 to 43,000 g/mol, or 34,000 to 41,000 g/mol, or 35,000 to 40,000 g/mol. The weight average molecular weight may be measured by gel permeation chromatography using a crosslinked styrene-divinyl benzene column, at a sample concentration of 1 milligram per milliliter, and using polystyrene standards and calculated for polycarbonate.

The thermoplastic compositions may be substantially free of a polycarbonate other than the homopolycarbonate and the poly(carbonate-siloxane)s of the poly(carbonate-siloxane) component. As used herein, in this context, "substantially free" means that the thermoplastic compositions have less than 5 wt%, less than 1 wt%, less than 0.5 wt%, less than 0.1 wt%, or less than 0.01 wt% of a polycarbonate other than the homopolycarbonate and the poly(carbonate-siloxane)s of the poly(carbonate-siloxane) component. In certain aspects, a polycarbonate other than the homopolycarbonate and the poly(carbonate-siloxane)s of the poly(carbonate-siloxane) component is absent. For example, the composition may be substantially free of or exclude a polyester, a poly(ester-carbonate), a copolycarbonate different from the poly(carbonate-siloxane), or a combination thereof.

The thermoplastic compositions include an antimicrobial agent including silver silicate powder, silver silicate glass powder, or a combination thereof. The antimicrobial agent may also include an additional antimicrobial agent different from the silver silicate glass powder and silver silicate powder. Exemplary antimicrobial agents may include, but are not limited to a metal containing agent, such as Ag, Cu, Al, Sb, As, Ba, Bi, B, Au, Pb, Hg, Ni, Th, Sn, Zn containing agent. In an aspect, the additional antimicrobial agent may be a silver-containing agent different from the silver zinc zeolite. The additional silver-containing microbial agent may contain a silver ion, colloidal silver, silver salt, silver complex, silver protein, silver nanoparticle, silver functionalized clay, zeolite containing silver ions or any combinations thereof. The additional antimicrobial agent may include silver nanoparticles, silver copper zeolite, silver zeolite, silver phosphate on glass, silver zinc zeolite, silver zirconium phosphate powder, or a combination thereof. Silver salts or silver complexes may include silver acetate, silver benzoate, silver carbonate, silver ionate, silver iodide, silver lactate, silver laureate, silver nitrate, silver oxide, silver palpitate, silver sulfadiazine, silver sulfate, silver chloride, or any combinations thereof. In some aspects, the thermoplastic compositions are substantially free of an additional antimicrobial agent. As used herein, "substantially free" of an additional antimicrobial agent means that the thermoplastic compositions have less than 0.1 wt%, or less than 0.01 wt% of an additional antimicrobial agent. In some aspects, an additional antimicrobial agent is absent from the thermoplastic compositions.

The antimicrobial agent may be included in an amount to achieve antimicrobial activity while not adversely affecting the % transmission and haze of the composition. In some aspects, the antimicrobial agent comprises a silver silicate powder present in an amount effective to provide less than 200 per million (ppm), less than 150 ppm, less than 100 ppm, 75 ppm or less, or less than 50 ppm, or from 1-200 ppm, from 1-150 ppm, from 1-100 ppm, from 1-75 ppm, from 1-50 ppm, from 10-200 ppm, from 10-150 ppm, from 10-100 ppm, from 10-75 ppm or from 10-50 ppm of elemental silver based on the total weight of the thermoplastic composition. In some aspects, the antimicrobial agent comprises a silver silicate glass powder present in an amount effective to provide 300 ppm or less, less than 300 ppm, less than 250 ppm, less than 200 ppm, 160 or less, less than 150 ppm, from 1-300 ppm, from 1-250 ppm, from 1-200 ppm, from 1-160 ppm, from 1-150 ppm, from 10-300 ppm, from 10-250 ppm, from 10-200 ppm, from 10-160 ppm, or from 10-150 ppm of elemental silver based on the total weight of the thermoplastic composition.

An additive composition may be used, comprising one or more additives selected to achieve a desired property, with the proviso that the additive(s) are also selected so as to not significantly adversely affect a desired property of the thermoplastic composition. The additive composition or individual additives may be mixed at a suitable time during the mixing of the components for forming the composition. The additive may be soluble or non-soluble in polycarbonate. The additive composition may include an impact modifier, flow modifier, filler (e.g., a particulate polytetrafluoroethylene (PTFE), glass, carbon, mineral, or metal), reinforcing agent (e.g., glass fibers), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g, a dye or pigment), surface effect additive, radiation stabilizer, flame retardant, anti-drip agent (e.g., a PTFE-encapsulated styrene-acrylonitrile copolymer (TSAN)), or a combination thereof. For example, a combination of a heat stabilizer, mold release agent, and ultraviolet light stabilizer may be used. In general, the additives are used in the amounts generally known to be effective. For example, the total amount of the additive composition (other than any impact modifier, filler, or reinforcing agent) may be 0.001 to 10.0 wt%, or 0.01 to 5 wt%, each based on the total weight of the polymer in the composition.

The thermoplastic compositions may be substantially free of an impact modifier, for example silicone-based impact modifiers different from the poly(carbonate-siloxane)s of the poly(carbonate-siloxane) component, methyl methacrylate-butadiene-styrene copolymers, acrylonitrile-butadiene, styrene copolymers, and the like, or a combination thereof. As used herein, "substantially free of an impact modifier" means less than 1 wt%, less than 0.1 wt%, or less than 0.01 wt%, each based on the total weight of the composition. In some aspects, an impact modifier may be absent.

The thermoplastic compositions may be manufactured by various methods known in the art. For example, the powdered polycarbonate(s), and other optional components are first blended, optionally with any fillers, in a high speed mixer or by hand mixing. The blend is then fed into the throat of a twin-screw extruder via a hopper. Alternatively, at least one of the components may be incorporated into the composition by feeding it directly into the extruder at the throat or downstream through a sidestuffer, or by being compounded into a masterbatch with a desired polymer and fed into the extruder. The extruder is generally operated at a temperature higher than that necessary to cause the composition to flow. The extrudate may be immediately quenched in a water bath and pelletized. The pellets so prepared may be one-fourth inch long or less as desired. Such pellets may be used for subsequent molding, shaping, or forming.

A molded sample of the thermoplastic composition may have antimicrobial activity. In an exemplary aspect, a molded sample having a thickness of 1 millimeter has a percent transmission of 85% or more according to ASTM D1003-00 and a percent haze of 10% or less according to ASTM D1003-00. In some aspects, a molded sample having a thickness of 1 millimeter has a percent haze of 5% or less according to ASTM D1003-00.

Shaped, formed, or molded articles comprising the thermoplastic compositions are also provided. The thermoplastic compositions can be molded into useful shaped articles by a variety of methods, such as injection molding, extrusion, rotational molding, blow molding and thermoforming. Some examples of articles include computer and business machine housings such as housings for monitors, handheld electronic device housings such as housings for cell phones, electrical connectors, and components of lighting fixtures, ornaments, home appliances, and the like.

This disclosure is further illustrated by the following examples, which are nonlimiting.

### EXAMPLES

The following components are used in the examples. Unless specifically indicated otherwise, the amount of each component is in wt%, based on the total weight of the composition.

The materials shown in Table 1 were used.

**Table 1.**

| Component | Description | Source |
|---|---|---|
| PC-1 | Linear bisphenol A polycarbonate, CAS Reg. No, 25971-63-5, having a molecular weight (Mw) of 30,000 - 31,000 grams per mole, as determined by gel permeation chromatography using polystyrene standards and calculated for polycarbonate, produced by interfacial polymerization and endcapped with p-cumylphenol | SABIC |
| PC-2 | Bisphenol A polycarbonate homopolymer, prepared by interfacial process, Mw = 21,000-23,000 g/mol as per GPC using polystyrene standards and calculated for polycarbonate; a melt flow rate of 25-30 grams per 10 min at 300 °C and a 1.2-kilogram load, as determined by ISO 1133. | SABIC |
| PC-Si-2 | Poly(bisphenol A carbonate-dimethylsiloxane) copolymer produced via interfacial polymerization, 6 wt% siloxane, average siloxane block length = 45 units (D45), Mw = 29,000-31,000 g/mol, as determined by GPC using polystyrene standards and calculated for polycarbonate, para-cumylphenol (PCP) end-capped, PDI = 2-3 | SABIC |
| AMA-1 | Ag/Silicate antimicrobial powder with coupling agent, Ag ion loading 9000ppm | JINDA |
| AMA-2 | Ag/silicate antimicrobial powder, Ag ion loading 25,000ppm | MICROBAHN |
| AMA-3 | Glass Ag/silicate antimicrobial powder, Ag ion loading 20,000ppm | ISHIZUKA |
| PHOS | Tetrakis(2,4-di-terbutylphenyl)-4,4-biphenyldiphosphonite | |
| STAB | 2-(2'HYDROXY-5-T-OCTYLPHENYL)-BENZOTRIAZOLE (UVA 5411) | |

The testing samples were prepared as described below and the following test methods were used.

Typical compounding procedures are described as follows: All raw materials are pre-blended and then extruded using a twin extruder. The composition was melt-kneaded, extruded, cooled through a water bath and pelletized. A typical extrusion profile is listed in Table 2.

**Table 2.**

| Parameters | Unit | |
|---|---|---|
| Compounder Type | NONE | TEM-37BS |
| Barrel Size | mm | 1500 |
| Die | mm | 3 |
| Zone 1 Temp | °C | 50 |
| Zone 2 Temp | °C | 100 |
| Zone 3 Temp | °C | 270 |
| Zone 4 Temp | °C | 270 |
| Zone 5 Temp | °C | 270 |
| Zone 6 Temp | °C | 270 |
| Zone 7 Temp | °C | 270 |
| Zone 8 Temp | °C | 270 |
| Zone 9 Temp | °C | 270 |
| Zone 10 Temp | °C | 270 |
| Zone 11 Temp | °C | 270 |
| Die Temp | °C | 270 |
| Screw speed | rpm | 400 |
| Throughput | kg/hr | 40 |
| Torque | % | 70-80 |
| Vacuum 1 | bar | -0.08 |
| Side Feeder 1 speed | rpm | 250 |
| Melt temperature | °C | 280 - 310 |

The extruded pellets were molded into testing specimens after drying the extruded pellets at 120 °C for 3 hours using injection molding (for parameters see Table 3).

**Table 3.**

| Parameters | Unit | |
|---|---|---|
| Cnd: Pre-drying time | Hour | 4 |
| Cnd: Pre-drying temp | °C | 110 |
| Mold Type (insert) | NONE | ASTM Tensile, Flexural, & Izod bars, color chips |
| Hopper temp | °C | 50 |
| Zone 1 temp | °C | 275 |
| Zone 2 temp | °C | 285 |
| Zone 3 temp | °C | 300 |
| Nozzle temp | °C | 280 |
| Mold temp | °C | 90 |
| Screw speed | rpm | 50 |
| Back pressure | kgf/cm² | 10 |
| Cooling time | s | 20-30 |
| Injection speed | mm/s | 50-100 |
| Holding pressure | kgf/cm² | 800-1000 |
| Max. Injection pressure | kgf/cm² | 1000-1500 |

Sample preparation and testing methods are described in Table 4.

**Table 4.**

| Property | Standard | Conditions | Specimen Type |
|---|---|---|---|
| Mw | SABIC | GPC | Bar-63.5mm x 12.7mm x 3.2 mm |
| Melt volume rate | ASTM D1238-04 | 330 °C/ 2.16 kg, 300 s | |
| Transmission | ASTM D1003-00 | | 1 mm plaque |
| Haze | ASTM D1003-00 | | 1 mm plaque |
| Tensile stress and modulus | ASTM D638 | 23 °C, 3.2 mm with a speed of 50 mm/min | Bar- 57.0 mm x 13.0mm x 3.2mm |
| Flexural stress and modulus | ASTM D790 | 23 °C, 3.2 mm with a speed of 1.27 mm/min | Bar-127.0mm* 12.7mm*3.2mm |
| Notched Izod | ASTM D256 | 23 °C, 3.2 mm | Bar-63.5mm x 12.7mm x 3.2 mm |
| Antimicrobial rate | Modified ISO 22196, performed by SCIESSENT | | Plaque 50mm x 50mm x 3.2 mm |

Table 6 shows the compositions and properties for Comparative Example 1 and Examples 2-11.

**Table 7.**

| Components | Units | 1* | 2 | 3 | 4 | 5 | 6 | 7 | 8 | 9 | 10 | 11 |
|---|---|---|---|---|---|---|---|---|---|---|---|---|
| PC-1 | wt% | 6 | 6 | 6 | 6 | 6 | 6 | 6 | 6 | 6 | 6 | 6 |
| PC-2 | wt% | 10.84 | 10.04 | 9.84 | 9.34 | 8.84 | 10.54 | 10.24 | 9.94 | 10.04 | 9.34 | 8.84 |
| PC-Si-2 | wt% | 83 | 83 | 83 | 83 | 83 | 83 | 83 | 83 | 83 | 83 | 83 |
| AMA-1 | wt% | | 0.8 | 1 | 1.5 | 2 | | | | | | |
| AMA-2 | wt% | | | | | | 0.3 | 0.6 | 0.9 | | | |
| AMA-3 | wt% | | | | | | | | | 0.8 | 1.5 | 2 |
| PHOS | wt% | 0.1 | 0.1 | 0.1 | 0.1 | 0.1 | 0.1 | 0.1 | 0.1 | 0.1 | 0.1 | 0.1 |
| STAB | wt% | 0.06 | 0.06 | 0.06 | 0.06 | 0.06 | 0.06 | 0.06 | 0.06 | 0.06 | 0.06 | 0.06 |
| Total | wt% | 100 | 100 | 100 | 100 | 100 | 100 | 100 | 100 | 100 | 100 | 100 |
| Siloxane content | wt% | 4.98 | 4.98 | 4.98 | 4.98 | 4.98 | 4.98 | 4.98 | 4.98 | 4.98 | 4.98 | 4.98 |
| Silver content | ppm | 0 | 72 | 90 | 135 | 180 | 75 | 150 | 225 | 160 | 300 | 400 |

| Properties | | | | | | | | | | | | |
|---|---|---|---|---|---|---|---|---|---|---|---|---|
| MFR, 300 °C, 1.2 kg | g/10 min | 10.8 | 13.3 | 13.9 | 13.7 | 14.4 | 12.4 | 12.6 | 12.2 | 11.1 | 12.5 | 12.2 |
| Flexural Stress, yld, 1.3 mm/min, 50 mm span | MPa | 89.6 | 89.9 | 90 | 88 | 87 | 91.1 | 90.9 | 87.8 | 87 | 86.9 | 86.6 |
| Flexural Stress, brk, 1.3 mm/min, 50 mm span | MPa | 87.8 | 88.1 | 88.2 | 86.2 | 85.3 | 89.3 | 89.1 | 86.1 | 85.2 | 85.1 | 84.9 |
| Flexural Modulus, 1.3 mm/min, 50 mm span | MPa | 2120 | 2130 | 2140 | 2120 | 2100 | 2130 | 2120 | 2060 | 2040 | 2040 | 2050 |
| Izod Impact, notched, 23°C | J/m | 848 | 463 | 401 | 246 | 196 | 581 | 500 | 415 | 511 | 379 | 281 |
| Izod Impact, notched, -30 °C | J/m | 666 | 126 | 122 | 110 | 103 | 155 | 139 | 123 | 143 | 124 | 116 |
| Tensile modulus | MPa | 2125 | 2133 | 2134 | 2072 | 2081 | 2114 | 2119 | 2047 | 2035 | 2038 | 2051 |
| Tensile strain, brk | MPa | 76.8 | 44.2 | 70.4 | 44.8 | 60.2 | 64.2 | 56.2 | 55.4 | 37.9 | 70.6 | 45.3 |
| Tensile stress, brk | MPa | 50.6 | 44.4 | 48.5 | 44.2 | 47.9 | 48.2 | 47.7 | 53.4 | 43.2 | 51.1 | 46.1 |
| Transmission | % | 89.4 | 89.1 | 88.7 | 88.7 | 87.4 | 90.1 | 89.8 | 89.9 | 90.2 | 89.8 | 89.2 |
| Haze, 1mm | | 2.7 | 7 | 9.4 | 13 | 18.5 | 6 | 11 | 15.7 | 6.1 | 10.7 | 14.9 |
| Antimicrobial rate %, e. coli ATCC 8739 | | | 99 | | 99 | 99 | 99 | 99 | 99 | 99 | 99 | 99 |
| Antimicrobial rate, % s. aureus ATCC 6538P | | | 99 | | 99 | 99 | 99 | 99 | 99 | 99 | 99 | 99 |

| | | | | | | | | | | | | |
|---|---|---|---|---|---|---|---|---|---|---|---|---|
| *Comparative Examples | | | | | | | | | | | | |

Table 7 shows compositions including a combination of linear BPA homopolycarbonates (PC-1 and PC-2) and a poly(carbonate-siloxane) having 6 wt% siloxane content. Addition of antimicrobial agents (AMA-1, AMA-2, and AMA-3) did not adversely affect the optical (i.e., % transmission) properties and the mechanical properties (i.e., tensile and flexural) were similar to compositions wherein the antimicrobial agents were absent (compare Examples 2-11 with Comparative Example 1). As shown in Example 2, when the silver loading is as low as 72 ppm using AMA-1 (silver content 9,000 ppm), antimicrobial activity is achieved and the haze is minimized (i.e., 7%). Similarly, when a different silver silicate antimicrobial agent was used having a higher silver content (i.e., AMA-2 with 20,000 ppm silver content), a silver loading of 75 ppm was effective to provide antimicrobial activity and a haze of 6%. When the antimicrobial agent was silver silicate glass powder (i.e., AMA-3 with 29,000 ppm silver content), higher silver loadings were tolerated (e.g., 160 ppm silver) to provide antimicrobial activity and a haze of 6.1%.
Aspect 1. A thermoplastic composition comprising: a homopolycarbonate; a poly(carbonate siloxane) present in an amount effective to provide 0.5-10 wt% total siloxane content; based on the total weight of the composition; an antimicrobial agent comprising silver silicate powder, silver silicate glass powder, or a combination thereof.
Aspect 2. The thermoplastic composition of Aspect 1 comprising: a homopolycarbonate; a poly(carbonate siloxane) present in an amount effective to provide 0.5-10 wt% total siloxane content; an antimicrobial agent comprising a silver silicate powder present in an amount effective to provide up to 100 ppm of elemental silver to the composition, a silver silicate glass powder present in an amount effective to provide up to 300 ppm of elemental silver to the composition, or a combination thereof; optionally, an additive composition; each based on the total weight of the composition which totals to 100 wt%.
Aspect 3. The thermoplastic composition of Aspect 1 or Aspect 2, wherein: a molded sample having a thickness of 1 millimeter has a percent transmission of 85% or more according to ASTM D1003-00; and a molded sample having a thickness of 1 millimeter has a percent haze of 10% or less according to ASTM D1003-00 the composition has an antimicrobial rate of at least 95% according to ISO22196.
Aspect 4a. The thermoplastic composition of any one of the preceding aspects wherein the poly(carbonate siloxane) comprises 3 to 25 wt% siloxane units.
Aspect 4b. The thermoplastic composition of any one of the preceding aspects wherein the poly(carbonate siloxane) comprises 10 wt% or less siloxane units.
Aspect 4c. The thermoplastic composition of any one of the preceding aspects wherein the poly(carbonate siloxane) comprises a first poly(carbonate siloxane) comprising 10 wt% or less siloxane units, a second poly(carbonate siloxane) comprising greater than 10 wt% to less than 20 wt% siloxane units, or a combination thereof.
Aspect 5. The thermoplastic composition of any one of the preceding aspects comprising 5-25 wt% of a homopolycarbonate; 75-95 wt% of a poly(carbonate-siloxane); an 23 antimicrobial agent comprising silver silicate powder present in an amount effective to provide up to 100 ppm of elemental silver to the composition, a silver silicate glass powder present in an amount effective to provide up to 300 ppm of elemental silver to the composition, or a combination thereof, optionally, up to 5 wt% of an additive composition; each based on the total weight of the composition which totals to 100 wt%.
Aspect 6. The thermoplastic composition of any one of the preceding aspects comprising silver silicate powder, wherein the silver silicate powder is present in an amount effective to provide 75 ppm or less of elemental silver content.
Aspect 7. The thermoplastic composition of any one of the preceding aspects comprising silver silicate glass powder, wherein the silver silicate glass powder is present in an amount effective to provide 160 ppm or less of elemental silver content.
Aspect 8. The thermoplastic composition of any one of the preceding aspects, wherein the silver silicate glass powder particles have an average diameter of less than 100 micrometer.
Aspect 9. The thermoplastic composition of any one of the preceding aspects, wherein the linear homopolymer comprises a linear bisphenol A homopolycarbonate having a weight average molecular weight of 26,000-40,000 grams per mole, a linear bisphenol A homopolycarbonate having a weight average molecular weight of 15,000-25,000 grams per mole, or a combination thereof, each as measured via gel permeation chromatography using polystyrene standards and calculated for polycarbonate.
Aspect 10. The thermoplastic composition of any one of the preceding aspects, wherein the antimicrobial agent further comprises silver nanoparticles, silver zinc zeolite, silver copper zeolite, silver zeolite, or a combination thereof.
Aspect 11. The thermoplastic composition of any one of the preceding aspects, wherein the antimicrobial agent excludes silver oxide, silver zinc zeolite, silver particles, or a combination thereof.
Aspect 12. The thermoplastic composition of Aspect 9, wherein a ratio by weight of the bisphenol A homopolycarbonates is from 1:10 to 10:1, based on the total weight of the composition.
Aspect 13. The thermoplastic composition of any one of the preceding aspects, wherein the additive composition is present and comprises an impact modifier, a filler, a reinforcing agent, an antioxidant, a heat stabilizer, a light stabilizer, a ultraviolet light stabilizer, a plasticizer, a lubricant, a mold release agent, an antistatic agent, a colorant, a surface effect additive, a radiation stabilizer, a flame retardant, an anti-drip agent or a combination thereof.
Aspect 14. An article comprising the thermoplastic composition of any one of the preceding aspects, preferably wherein the article is a consumer electronics component or a home appliance component.
Aspect 15. A method for forming the article according to aspect 14, comprising molding, casting, or extruding the composition to provide the article.

The compositions, methods, and articles may alternatively comprise, consist of, or consist essentially of, any appropriate materials, steps, or components herein disclosed. The compositions, methods, and articles may additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof" is open and includes any combination comprising at least one of the listed components or properties optionally together with a like or equivalent component or property not listed.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups may be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that may each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

## Claims

1. A thermoplastic composition comprising:
a homopolycarbonate;
a poly(carbonate siloxane) present in an amount effective to provide 0.5-10 wt% total siloxane content, based on the total weight of the composition;
an antimicrobial agent comprising silver silicate powder, silver silicate glass powder, or a combination thereof.

2. The thermoplastic composition of Claim 1 comprising:
a homopolycarbonate;
a poly(carbonate siloxane) present in an amount effective to provide 0.5-10 wt% total siloxane content, based on the total weight of the composition;
an antimicrobial agent comprising a silver silicate powder present in an amount effective to provide up to 100 ppm of elemental silver to the composition, silver silicate glass powder present in an amount effective to provide up to 300 ppm of elemental silver to the composition, or a combination thereof;
optionally, an additive composition

3. The thermoplastic composition of Claim 1 or Claim 2, wherein:
a molded sample having a thickness of 1 millimeter has a percent transmission of 85% or more according to ASTM D1003-00; and
a molded sample having a thickness of 1 millimeter has a percent haze of 10% or less according to ASTM D1003-00;
the composition has an antimicrobial rate of at least 95% according to ISO22196.

4. The thermoplastic composition of any one of the preceding claims wherein the poly(carbonate siloxane) comprises 3 to 25 wt% siloxane units, based on the total weight of the poly(carbonate siloxane).

5. The thermoplastic composition of any one of the preceding claims comprising
5-25 wt% of a homopolycarbonate;
75-95 wt% of a poly(carbonate-siloxane);
an antimicrobial agent comprising silver silicate powder present in an amount effective to provide up to 100 ppm of elemental silver to the composition, a silver silicate glass powder present in an amount effective to provide up to 300 ppm of elemental silver to the composition, or a combination thereof.
optionally, up to 5 wt% of an additive composition;
each based on the total weight of the composition which totals to 100 wt%.

6. The thermoplastic composition of any one of the preceding claims comprising silver silicate powder, wherein the silver silicate powder is present in an amount effective to provide 75 ppm or less of elemental silver content to the composition.

7. The thermoplastic composition of any one of the preceding claims comprising silver silicate glass powder, wherein the silver silicate glass powder is present in an amount effective to provide 160 ppm or less of elemental silver content to the composition.

8. The thermoplastic composition of any one of the preceding claims, wherein the linear homopolymer comprises
a linear bisphenol A homopolycarbonate having a weight average molecular weight of 26,000-40,000 grams per mole,
a linear bisphenol A homopolycarbonate having a weight average molecular weight of 15,000-25,000 grams per mole,
or a combination thereof,
each as measured via gel permeation chromatography using polystyrene standards and calculated for polycarbonate.

9. The thermoplastic composition of any one of the preceding claims, wherein the antimicrobial agent further comprises silver nanoparticles, silver zinc zeolite, silver copper zeolite, silver zeolite, or a combination thereof.

10. The thermoplastic composition of any one of the preceding claims, wherein the antimicrobial agent excludes silver oxide, silver zinc zeolite, silver particles, or a combination thereof.

11. The thermoplastic composition of Claim 8, wherein a ratio by weight of the bisphenol A homopolycarbonates is from 1:10 to 10:1, based on the total weight of the composition.

12. The thermoplastic composition of any one of the preceding claims, wherein the additive composition is present and comprises an impact modifier, a filler, a reinforcing agent, an antioxidant, a heat stabilizer, a light stabilizer, a ultraviolet light stabilizer, a plasticizer, a lubricant, a mold release agent, an antistatic agent, a colorant, a surface effect additive, a radiation stabilizer, a flame retardant, an anti-drip agent or a combination thereof.

13. An article comprising the thermoplastic composition of any one of the preceding claims, preferably wherein the article is a consumer electronics component or a home appliance component.

14. A method for forming the article according to Claim 13, comprising molding, casting, or extruding the composition to provide the article.

## Patentansprüche

1. Thermoplastische Zusammensetzung, umfassend:
ein Homopolycarbonat;
ein Poly(carbonatsiloxan), das in einer Menge vorhanden ist, die geeignet ist, einen Gesamtsiloxangehalt von 0,5-10 Gew.-%, bezogen auf das Gesamtgewicht der Zusammensetzung, bereitzustellen;
ein antimikrobielles Mittel, enthaltend Silbersilikatpulver, Silbersilikatglaspulver oder eine Kombination davon.

2. Thermoplastische Zusammensetzung nach Anspruch 1, umfassend:
ein Homopolycarbonat;
ein Poly(carbonatsiloxan), das in einer Menge vorhanden ist, die geeignet ist, einen Gesamtsiloxangehalt von 0,5-10 Gew.-%, bezogen auf das Gesamtgewicht der Zusammensetzung, bereitzustellen;
ein antimikrobielles Mittel, enthaltend ein Silbersilikatpulver, das in einer Menge vorhanden ist, die geeignet ist, bis zu 100 ppm elementares Silber in der Zusammensetzung bereitzustellen, Silbersilikatglaspulver, das in einer Menge vorhanden ist, die geeignet ist, bis zu 300 ppm elementares Silber in der Zusammensetzung bereitzustellen, oder eine Kombination davon;
gegebenenfalls eine Additivzusammensetzung.

3. Thermoplastische Zusammensetzung nach Anspruch 1 oder Anspruch 2, wobei:
eine geformte Probe mit einer Dicke von 1 Millimeter eine prozentuale Durchlässigkeit von 85 % oder mehr gemäß ASTM D1003-00 aufweist; und
eine geformte Probe mit einer Dicke von 1 Millimeter eine prozentuale Trübung von 10 % oder weniger gemäß ASTM D1003-00 aufweist;
die Zusammensetzung eine antimikrobielle Wirkung von mindestens 95 % gemäß IS022196 aufweist.

4. Thermoplastische Zusammensetzung nach einem der vorhergehenden Ansprüche, wobei das Poly(carbonatsiloxan) 3 bis 25 Gew.-% Siloxaneinheiten aufweist, bezogen auf das Gesamtgewicht des Poly(carbonatsiloxans).

5. Thermoplastische Zusammensetzung nach einem der vorangehenden Ansprüche umfassend:
5-25 Gew.-% eines Homopolycarbonats;
75-95 Gew.-% eines Poly(carbonatsiloxans);
ein antimikrobielles Mittel, enthaltend Silbersilikatpulver, das in einer Menge vorhanden ist, die geeignet ist, bis zu 100 ppm elementares Silber in der Zusammensetzung bereitzustellen, ein Silbersilikatglaspulver, das in einer Menge vorhanden ist, die geeignet ist, bis zu 300 ppm elementares Silber in der Zusammensetzung bereitzustellen, oder eine Kombination davon;
gegebenenfalls bis zu 5 Gew.-% einer Additivzusammensetzung;
jeweils bezogen auf das Gesamtgewicht der Zusammensetzung, das sich auf 100 Gew.- % beläuft.

6. Die thermoplastische Zusammensetzung nach einem der vorhergehenden Ansprüche, umfassend Silbersilikatpulver, wobei das Silbersilikatpulver in einer Menge vorhanden ist, die geeignet ist, in der Zusammensetzung einen Gehalt an elementarem Silber von 75 ppm oder weniger bereitzustellen.

7. Die thermoplastische Zusammensetzung nach einem der vorhergehenden Ansprüche umfassend Silbersilikatglaspulver, wobei das Silbersilikatglaspulver in einer Menge vorhanden ist, die geeignet ist, in der Zusammensetzung einen Gehalt an elementarem Silber von 160 ppm oder weniger bereitzustellen.

8. Thermoplastische Zusammensetzung nach einem der vorhergehenden Ansprüche, wobei das lineare Homopolymer aufweist:
ein lineares Bisphenol-A-Homopolycarbonat mit einem gewichtsmittleren Molekulargewicht von 26.000-40.000 Gramm pro Mol,
ein lineares Bisphenol-A-Homopolycarbonat mit einem gewichtsmittleren Molekulargewicht von 15.000-25.000 Gramm pro Mol,
oder eine Kombination davon,
jeweils gemessen durch Gelpermeationschromatographie unter Verwendung von Polystyrolstandards und berechnet für Polycarbonat.

9. Die thermoplastische Zusammensetzung nach einem der vorhergehenden Ansprüche, wobei das antimikrobielle Mittel weiterhin Silbernanopartikel, Silberzinkzeolith, Silberkupferzeolith, Silberzeolith oder eine Kombination davon aufweist.

10. Thermoplastische Zusammensetzung nach einem der vorhergehenden Ansprüche, wobei das antimikrobielle Mittel Silberoxid, Silber-Zink-Zeolith, Silberpartikel oder eine Kombination davon ausschließt.

11. Thermoplastische Zusammensetzung nach Anspruch 8, wobei das Gewichtsverhältnis der Bisphenol-A-Homopolycarbonate im Bereich von 1:10 bis 10:1 liegt, bezogen auf das Gesamtgewicht der Zusammensetzung.

12. Thermoplastische Zusammensetzung nach einem der vorhergehenden Ansprüche, wobei die Additivzusammensetzung vorhanden ist und einen Schlagzähigkeitsmodifikator, einen Füllstoff, ein Verstärkungsmittel, ein Antioxidationsmittel, einen Hitzestabilisator, einen Lichtstabilisator, einen UV-Lichtstabilisator, einen Weichmacher, ein Gleitmittel, ein Formtrennmittel, ein antistatisches Mittel, ein Färbemittel, ein Oberflächeneffektadditiv, einen Strahlungsstabilisator, ein Flammschutzmittel, ein Antitropfmittel oder eine Kombination davon aufweist.

13. Gegenstand, der die thermoplastische Zusammensetzung nach einem der vorhergehenden Ansprüche aufweist, wobei der Gegenstand vorzugsweise ein Bauteil der Unterhaltungselektronik oder ein Haushaltsgerät ist.

14. Verfahren zur Bildung des Gegenstands nach Anspruch 13, umfassend das Formen, Gießen oder Extrudieren der Zusammensetzung zur Bereitstellung des Gegenstands.

## Revendications

1. Composition thermoplastique comprenant :
un homopolycarbonate ;
un poly(carbonate siloxane) présent en une quantité efficace pour fournir 0,5 à 10 % en poids de la teneur en siloxane totale, par rapport au poids total de la composition ;
un agent antimicrobien comprenant une poudre de silicate d'argent, une poudre de verre de silicate d'argent, ou une de leurs combinaisons.

2. Composition thermoplastique selon la revendication 1, comprenant :
un homopolycarbonate ;
un poly(carbonate siloxane) présent en une quantité efficace pour fournir 0,5 à 10 % en poids de la teneur en siloxane totale, par rapport au poids total de la composition ;
un agent antimicrobien comprenant une poudre de silicate d'argent présente en une quantité efficace pour fournir jusqu'à 100 ppm d'argent élémentaire à la composition, une poudre de verre de silicate d'argent présente en une quantité efficace pour fournir jusqu'à 300 ppm d'argent élémentaire à la composition, ou une de leurs combinaisons ;
éventuellement une composition d'additifs.

3. Composition thermoplastique selon la revendication 1 ou la revendication 2, dans laquelle :
un échantillon moulé ayant une épaisseur de 1 millimètre a un pourcentage de transmission de 85 % ou plus conformément à la norme ASTM D1003-00 ; et
un échantillon moulé ayant une épaisseur de 1 millimètre a un pourcentage de voile de 10 % ou moins conformément à la norme ASTM D1003-00 ;
la composition a un taux antimicrobien d'au moins 95 % conformément à la norme ISO22196.

4. Composition thermoplastique selon l'une quelconque des revendications précédentes, dans laquelle le poly(carbonate siloxane) comprend 3 à 25 % en poids de motifs siloxane par rapport au poids total du poly(carbonate siloxane).

5. Composition thermoplastique selon l'une quelconque des revendications précédentes, comprenant
5 à 25 % en poids d'un homopolycarbonate ;
75 à 95 % en poids d'un poly(carbonate siloxane) ;
un agent antimicrobien comprenant une poudre de silicate d'argent présente en une quantité efficace pour fournir jusqu'à 100 ppm d'argent élémentaire à la composition, une poudre de verre de silicate d'argent présente en une quantité efficace pour fournir jusqu'à 300 ppm d'argent élémentaire à la composition, ou une de leurs combinaisons ;
éventuellement jusqu'à 5 % en poids d'une composition d'additifs ;
dans chaque cas par rapport au poids total de la composition qui s'accumule à 100 % en poids.

6. Composition thermoplastique selon l'une quelconque des revendications précédentes, comprenant une poudre de silicate d'argent, dans laquelle la poudre de silicate d'argent est présente en une quantité efficace pour fournir à la composition une teneur en argent élémentaire de 75 ppm ou moins.

7. Composition thermoplastique selon l'une quelconque des revendications précédentes, comprenant une poudre de verre de silicate d'argent, dans laquelle la poudre de verre de silicate d'argent est présente en une quantité efficace pour fournir à la composition une teneur en argent élémentaire de 160 ppm ou moins.

8. Composition thermoplastique selon l'une quelconque des revendications précédentes, dans laquelle l'homopolymère linéaire comprend
un homopolycarbonate de bisphénol A linéaire ayant une masse moléculaire moyenne en masse de 26 000 à 40 000 grammes par mole,
un homopolycarbonate de bisphénol A linéaire ayant une masse moléculaire moyenne en masse de 15 000 à 25 000 grammes par mole,
ou une de leurs combinaisons,
chacune telle que mesurée par chromatographie d'exclusion diffusion utilisant des étalons en polystyrène, et calculée pour le polycarbonate.

9. Composition thermoplastique selon l'une quelconque des revendications précédentes, dans laquelle l'agent antimicrobien comprend en outre des nanoparticules d'argent, une zéolite d'argent et de zinc, une zéolite d'argent et de cuivre, une zéolite d'argent, ou une de leurs combinaisons.

10. Composition thermoplastique selon l'une quelconque des revendications précédentes, dans laquelle l'agent antimicrobien exclut l'oxyde d'argent, une zéolite d'argent et de zinc, les particules d'argent, ou une de leurs combinaisons.

11. Composition thermoplastique selon la revendication 8, dans laquelle le rapport en poids des homopolycarbonates de bisphénol A est de 1/10 à 10/1 par rapport au poids total de la composition.

12. Composition thermoplastique selon l'une quelconque des revendications précédentes, dans laquelle la composition d'additifs est présente et comprend un modificateur d'impact, une charge, un agent de renforcement, un antioxydant, un stabilisant à la chaleur, un stabilisant à la lumière, un stabilisant aux ultraviolets, un plastifiant, un lubrifiant, un agent de démoulage, un agent antistatique, un colorant, un additif à effet de surface, un stabilisant aux radiations, un retardateur de flamme, un agent anti-goutte ou une de leurs combinaisons.

13. Article comprenant la composition thermoplastique de l'une quelconque des revendications précédentes, de préférence lequel article est un composant électronique grand public ou un composant d'appareil domestique.

14. Méthode pour former l'article de la revendication 13, comprenant le moulage, la coulée, ou l'extrusion de la composition pour former l'article.
